Europäisches Patentamt

European Patent Office

Office européen des brevets

(19)

(11) EP 1 453 339 A1

(12) EUROPÄISCHE PATENTANMELDUNG

(43) Veröffentlichungstag:
01.09.2004 Patentblatt 2004/36

(51) Int Cl.⁷: H04Q 7/38

(21) Anmeldenummer: 03004530.6

(22) Anmeldetag: 28.02.2003

(84) Benannte Vertragsstaaten:
AT BE BG CH CY CZ DE DK EE ES FI FR GB GR
HU IE IT LI LU MC NL PT SE SI SK TR
Benannte Erstreckungsstaaten:
AL LT LV MK RO

(71) Anmelder: SIEMENS AKTIENGESELLSCHAFT
80333 München (DE)

(72) Erfinder:
• Ball, Carsten, Dr.
81373 München (DE)
• Ivanov, Kolio, Dr.
81369 München (DE)
• Müllner, Robert
81379 München (DE)
• Treml, Franz
85221 Dachau (DE)

(54) **Verfahren zur Zuweisung funktechnischer Ressourcen für eine Datenübertragung in einem Funkkommunikationssystem**

(57) Bei der Zuweisung funktechnischer Ressourcen für eine Datenübertragung werden für einen Teilnehmer zuzuweisende Ressourcen auf einer ersten Schnittstelle zwischen einem Endgerät und einem ersten Netzknoten und auf einer zweiten Schnittstelle zwischen dem ersten Netzknoten und einem zweiten Netzknoten gemeinsam bestimmt, wobei eine vom Teilnehmer angeforderte Datenrate und Übertragungseigenschaften der ersten Schnittstelle berücksichtigt werden, wobei ein Zusammenhang auf der ersten Schnittstelle zuzuweisenden Ressourcen und auf der zweiten Schnittstelle zuzuweisenden Ressourcen berücksichtigt wird, wobei bereits bestehende Zuweisungen anderer Teilnehmer berücksichtigt werden und wobei der Nutzen aller Teilnehmer optimiert wird.

FIG 1

**Beschreibung**

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Ein Beispiel für ein Funkkommunikationssystem ist das bekannte GSM-Mobilfunksystem sowie dessen Weiterentwicklung mit dem Paketdatendienst GPRS beziehungsweise EDGE, deren Architektur zum Beispiel in B. Walke, Mobilfunknetze und ihre Protokolle, Band 1, Teubner-Verlag Stuttgart, 1998, Seite 138 bis 151 und Seite 295 bis 311, beschrieben ist. Dabei ist zur Übertragung eines Teilnehmersignals jeweils ein durch einen schmalbandigen Frequenzbereich und einen Zeitschlitz gebildeter Kanal vorgesehen. Da sich ein Teilnehmersignal in einem Kanal in Frequenz und Zeit von den übrigen Teilnehmersignalen unterscheidet, kann die Funkstation eine Detektion der Daten des Teilnehmersignals vornehmen. In neueren Funkkommunikationssystemen, wie zum Beispiel dem UMTS-System, werden die einzelnen Teilnehmer darüber hinaus durch unterschiedliche Spreizcodes unterschieden.

Bei der paketvermittelten Datenübertragung erfolgt die Datenübertragung für mehrere Teilnehmer über ein- und denselben physikalischen Kanal. In derzeit üblichen GPRS- beziehungsweise EDGE-Systemen sind für die paketvermittelte Datenübertragung mehrere, zum Beispiel sechs physikalische Kanäle, die als Paketdatenkanäle bezeichnet werden, vorgesehen. Jeder Teilnehmer kann dabei auch mehrere dieser Paketdatenkanäle gleichzeitig belegen (Multislot). Je Teilnehmer wird ein Paketdatenfluss (Temporary Block Flow TBF) dabei in zeitlich begrenzte Funkblöcke zerlegt, die übertragen werden. Dabei werden verschiedene Modulations-/Kodierschemata zum Fehlerschutz angewendet. Die möglichen Modulations-/Kodierschemata unterscheiden sich bezüglich der Aufteilung des Funkblocks in Nutzlast und Fehlerschutzinformation. Je nach eingestelltem Modulations-/Kodierschema haben diese Funkblöcke bei gleicher Länge unterschiedliche Nutzlast. Abhängig von den Funkbedingungen wird einer Verbindung ein Modulations-/Kodierschema mit höherem oder geringerem Fehlerschutz zugeordnet. Bei schlechten Funkbedingungen wird ein Modulations-/Kodierschema mit höherem Fehlerschutz und bei guten Funkbedingungen ein Modulations-/Kodierschema mit geringerem Fehlerschutz zugewiesen. Da sich der Anteil der Nutzlast je nach eingestelltem Modulations-/Kodierschema unterscheidet, unterscheidet sich auch die jeweils erzielbare Datenrate.

Zur Paketdatenvermittlung umfasst ein Funkkommunikationssystem zum Beispiel ein GSM-Mobilfunknetz mit GPRS, eine Vielzahl von Paketdatendienstknoten (Serving GPRS Support Node, SGSN), die untereinander vernetzt sind, und die den Zugang zu einem Festdatennetz herstellen. Die Paketdatendienstknoten sind ferner mit Basisstationssteuerungen (BSC) verbunden. Jede Basisstationssteuerung ermöglicht wiederum eine Verbindung zu mindestens einer Basisstation (BTS) und nimmt die Verwaltung der funktechnischen Ressourcen der angeschlossenen Basisstationen vor. Zur Verwaltung der funktechnischen Ressourcen für paketvermittelte Datenübertragungen umfasst die Basisstationssteuerung eine Paketdatensteuereinheit (Packet Control Unit PCU). Eine Basisstation ist eine Sende/ Empfangseinheit, die über eine Funkschnittstelle eine Nachrichtenverbindung zu einem mobilen Endgerät aufbauen kann. Die Zuweisung der einzelnen Teilnehmer auf einen Kanal für eine paketvermittelte Datenübertragung erfolgt über die Paketdatensteuereinheit.

Nach Ankunft der Daten in der Paketdatensteuereinheit PCU werden diese über die sogenannte Abis-Schnittstelle an die Basisstation übertragen, dort kodiert und über die Luftschnittstelle an die Mobilstation gesendet. Die $A_{bis}$-Schnittstelle ist eine PCM30-Verbindung mit einer Datenrate von 64 Kbit/s, die in vier Unterkanäle zu jeweils 16 Kbit/s aufgeteilt wird. Auf der $A_{bis}$-Schnittstelle wird somit pro Zeitschlitz ein Datenpaket konstanter Länge übertragen. Da einem Teilnehmer auf der Funkschnittstelle abhängig von dem verwendeten Modulations-/Kodierschema eine unterschiedliche Nutzdatenrate zur Verfügung steht, wird auf der $A_{bis}$-Schnittstelle für die weitere Übertragung dieser Daten abhängig von dem verwendeten Modulations-/Kodierschema eine unterschiedliche Menge an Zeitschlitzen erforderlich. Damit ein Teilnehmer, der über die Funkschnittstelle eine hohe Datenrate erhält, diese hohe Datenrate nutzen kann, müssen daher auf der $A_{bis}$-Schnittstelle entsprechend ausreichend Zeitschlitze zugewiesen werden können. Eine Möglichkeit, einen Engpass bei dieser Zuweisung zu vermeiden, besteht darin, die $A_{bis}$-Schnittstelle so auszulegen, dass jedem Teilnehmer, unabhängig von dem tatsächlich verwendeten Modulations-/Kodierschema die für die höchste Datenrate erforderliche Anzahl an Zeitschlitzen reserviert wird. Dieses führt jedoch zu einer schlechten Ausnutzung der Leitungskapazität.

Der Erfindung liegt somit das Problem zugrunde, ein Verfahren zur Zuweisung funktechnischer Ressourcen für eine paketvermittelte Datenübertragung anzugeben, bei dem einerseits zufriedenstellende Datenraten für alle Teilnehmer gewährleistet werden und andererseits die vorhandenen Infrastrukturressourcen effektiv genutzt werden.

Dieses Problem wird gelöst durch ein Verfahren gemäß Anspruch 1. Weitere Ausgestaltungen der Erfindung ergeben sich aus den Unteransprüchen.

In dem Verfahren werden für einen Teilnehmer zuzuweisende Ressourcen auf einer ersten Schnittstelle zwischen einem Endgerät und einem ersten Netzknoten und auf einer zweiten Schnittstelle zwischen dem ersten Netzknoten und einem zweiten Netzknoten gemeinsam bestimmt. Dabei werden sowohl eine vom Teilnehmer angeforderte Datenrate und Übertragungseigenschaften der ersten Schnittstelle, als auch ein Zusammenhang zwischen auf der ersten Schnittstelle zuzuweisenden Ressourcen und auf der zweiten Schnittstelle zuzuweisenden Ressourcen berücksichtigt. Ferner wird berücksichtigt, welche Ressourcen anderen Teilnehmern bereits zuvor zugewiesen worden sind. Schließlich wird der Nutzen aller Teilnehmer optimiert. Da in dem erfindungsgemäßen Verfahren die Ressourcen auf der ersten Schnittstelle und der zweiten Schnittstelle gemeinsam zugewiesen werden und dabei der Zusammenhang zwischen den auf der ersten Schnittstelle erforderlichen Ressourcen und den auf der zweiten Schnittstelle erforderlichen Ressourcen berücksichtigt wird, und gleichzeitig der Nutzen aller Teilnehmer optimiert wird, werden einerseits eine zufriedenstellende Datenrate für alle Teilnehmer gewährleistet und andererseits die vorhandenen Infrastrukturressourcen effektiv belegt. Die Tatsache, dass bereits bestehende Zuweisungen anderer Teilnehmer berücksichtigt werden, wirkt sich vorteilhaft auf die für die Zuweisung benötigte Rechenzeit und Prozessorleistung aus.

Gemäß einer bevorzugten Ausführungsform ist die erste Schnittstelle als Funkschnittstelle zwischen einem mobilen Endgerät und einer netzseitigen Funkstation, die den ersten Netzknoten bildet, ausgebildet. Auf der ersten Schnittstelle werden Paketdatenkanäle und Modulations- und Kodierschemata zugewiesen. Auf der zweiten Schnittstelle werden ein oder mehrere Zeitschlitze zugewiesen, wobei die Anzahl der zugewiesenen Zeitschlitze von der auf der ersten Schnittstelle realisierten Datenrate abhängig ist. Die auf der ersten Schnittstelle realisierte Datenrate hängt von dem zugewiesenen Kodierschema und den Übertragungseigenschaften der ersten Schnittstelle ab. Diese Ausführungsform des erfindungsgemäßen Verfahrens ist für die Zuweisung von Ressourcen auf der Funkschnittstelle zwischen mobilem Endgerät und Basisstation und der $A_{bis}$-Schnittstelle zwischen Basisstation und Basisstationssteuerung in einem GSM/GPRS/EDGE-System geeignet.

Vorzugsweise wird bei der Zuweisung von Elementen auf den Paketdatenkanälen berücksichtigt, auf wie vielen Kanälen das Endgerät gleichzeitig Senden beziehungsweise Empfangen kann. Es werden bei der Ermittlung der zuzuweisenden Elemente auf den Paketdatenkanälen nur Elemente auf höchstens so vielen Paketdatenkanälen betrachtet, wie es der Anzahl der Kanäle, auf denen das Endgerät gleichzeitig Senden beziehungsweise Empfangen kann, entspricht. Dadurch werden Zuweisungsmöglichkeiten, die das Endgerät ohnehin nicht nutzen kann, von vornherein verworfen. Dadurch wird Rechenzeit eingespart.

Vorzugsweise wird als Nutzen eines Teilnehmers der Quotient aus tatsächlicher Datenrate und vom Teilnehmer angeforderter Datenrate definiert. Als Nutzen aller Teilnehmer wird dann das Minimum der Quotienten aus tatsächlicher Datenrate und vom Teilnehmer angeforderter Datenrate für alle Teilnehmer definiert. Vorzugsweise wird der Nutzen aller Teilnehmer in dem Sinne optimiert, dass der Nutzen aller Teilnehmer maximal wird. Das bedeutet, dass der kleinste Quotient für einen Teilnehmer aus tatsächlicher Datenrate und vom Teilnehmer angeforderter Datenrate maximiert wird. Auf diese Weise wird sichergestellt, dass alle beteiligten Teilnehmer denselben Anteil an der von ihnen geforderten Datenrate erhalten.

Ist für einen Teilnehmer eine minimale Datenrate vorgegeben, die bei der Datenübertragung von und zu dem Teilnehmer nicht unterschritten werden soll, so liegt es im Rahmen der Erfindung, diese minimale Datenrate für diesen Teilnehmer als Randbedingung bei der Optimierung des Nutzens aller Teilnehmer zu berücksichtigen. Dadurch wird sichergestellt, dass dieser Teilnehmer die minimale Datenrate, die für das Funktionieren seines Dienstes erforderlich ist, auch bei hohem Verkehrsaufkommen erhält.

Es liegt im Rahmen der Erfindung, für den Teilnehmer zu prüfen, auf welche Anzahl Paketdatenkanäle die zuzuweisenden Elemente verteilt werden. Für alle plausiblen Kombinationen zusammenhängender Paketdatenkanäle, die der ermittelten Anzahl entsprechen, wird dann eine Zuweisung für den Teilnehmer untersucht und der Nutzen aller Teilnehmer ermittelt. Dem Teilnehmer wird anschließend die Kombination zusammenhängender Paketdatenkanäle zugewiesen, für die sich der größte Nutzen aller Teilnehmer ergibt. Der Nutzen aller Teilnehmer kann mathematisch exakt zum Beispiel durch lineare Optimierung bestimmt werden. Diese Vorgehensweise kombiniert somit eine mathematisch exakte Lösung des Zuweisungsproblems mit einem heuristischem Ansatz für die wahrscheinlich günstigsten zuzuweisenden Zeitschlitze auf der zweiten Funkschnittstelle.

Im Folgenden wird die Erfindung anhand der Figuren und eines Beispiels näher erläutert.

Figur 1 zeigt einen Ausschnitt aus der Architektur eines GSM/GPRS/EDGE-Systems.

Figur 2 zeigt ein Ablaufdiagramm für die Zuweisung von Ressourcen für einen neuen Teilnehmer.

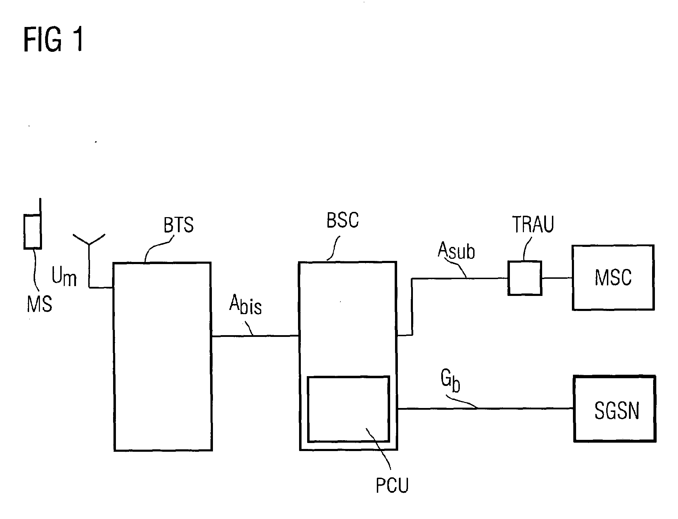

Ein Funkkommunikationssystem (siehe Figur 1) umfasst eine Vielzahl von Basisstationen BTS, über die eine Funkverbindung über eine Funkschnittstelle Um zu einem mobilen Endgerät MS hergestellt werden kann. Die Basisstation BTS ist über eine $A_{bis}$-Schnittstelle mit einer Basisstationssteuerung BSC verbunden. Die Basisstationssteuerung BSC ist über eine $A_{sub}$-Schnittstelle mit einer Transkodier- und Ratenadaptionseinheit TRAU verbunden, die über eine A-Schnittstelle mit einer Mobilvermittlungsstelle MSC verbunden ist. Die Mobilvermittlungsstelle MSC stellt die Verbindung zu anderen Netzen, zum Beispiel zum Festnetz dar. Über die $A_{bis}$-Schnittstelle, die $A_{sub}$-Schnittstelle und die A-Schnittstelle werden leitungsvermittelte Daten übertragen.

Im Basisstationssubsystem BSS, das aus Basisstation BTS und Basisstationssteuerung BSC gebildet wird, gibt es eine Paketdatensteuereinheit PCU, die beispielsweise an der Basisstationssteuerung BSC angebracht sein kann. Die Paketdatensteuereinheit PCU ist für die Vermittlung von paketvermittelten Daten zuständig und ist einerseits über die $A_{bis}$-Schnittstelle mit der Basisstation verbunden und andererseits zum Beispiel über eine $G_b$-Schnittstelle mit einem Paketdatendienstknoten SGSN verbunden, über den eine Verbindung zu einem Paketdatennetz, zum Beispiel dem IP-Netz, realisiert wird. Auf der Funkschnittstelle $U_m$ sind Paketdatenkanäle PDCH eingerichtet, über die eine paketvermittelte Datenübertragung realisiert wird. Für die paketvermittelte Datenübertragung stehen im GPRS-System und im EDGE-System verschiedene Modulations- und Kodierschemata zur Verfügung, die sich bezüglich ihres Fehlerschutzes unterscheiden. Modulations-/Kodierschemata, die einen großen Fehlerschutz gewährleisten, sind mit einer geringeren Datenübertragungsrate, Modulations-/Kodierschemata, die einen geringen Fehlerschutz bieten, sind mit einer höheren Datenübertragungsrate verbunden. Je nach den Übertragungsverhältnissen auf der Luftschnittstelle und den Anforderungen eines Teilnehmers bezüglich der Datenrate wird eine Verbindung von der Paketdatensteuereinheit PCU ein passendes Modulations-/Kodierschema zugewiesen. Die tatsächlich erzielte Datenrate hängt einerseits vom verwendeten Modulations-/Kodierschema und andererseits von der Zahl der erforderlichen Übertragungswiederholungen (retransmission rate) ab und wird anhand von Funkplanungstabellen beziehungsweise Messungen bestimmt.

In einem Ausführungsbeispiel sei die Anzahl der Paketdatenkanäle K, auf die N paketvermittelte Datenübertragungen von N Teilnehmern allokiert werden sollen. Jedem Paketdatenkanal kann dabei mehr als ein Teilnehmer zugewiesen werden, jedoch nicht mehr als eine maximale Anzahl $N_{max}$. Im GSM-System können bis zu 16 Teilnehmer auf einen Paketdatenkanal allokiert werden. Daraus folgt 1 <= $N_{max}$ <= 16.

Dabei können einem Teilnehmer Elemente auf mehr als einem Paketdatenkanal zugewiesen werden, wenn das Endgerät des Teilnehmers fähig ist, auf mehreren Kanälen gleichzeitig zu senden oder empfangen. Diese Eigenschaft wird als multislot capability bezeichnet. In heutigen GSM-Systemen ist es üblich, dass in diesem Fall dem Teilnehmer Elemente auf zusammenhängenden Kanälen, das heisst Kanälen mit fortlaufender Nummerierung zugewiesen werden.

Beim Verbindungsaufbau fordert ein Teilnehmer i eine Zieldatenrate $R_i^*$ an, die soweit möglich erreicht werden sollte. Ferner gibt der Teilnehmer i eine minimale Datenrate $R_i^{min}$ an, die für die Datenübertragung nicht unterschritten werden soll. Beispiele dafür sind Videoströme, bei denen eine Übertragung nicht mehr sinnvoll ist, sollte eine Mindestrate nicht garantiert werden können. Tatsächlich erhält der Teilnehmer die Datenrate $R_i$, die von den Übertragungseigenschaften des Funkkanals , von der Auslastung des Netzes und den dem Teilnehmer zugeteilten Resourcen abhängt. Dabei gehen die physikalischen Ausbreitungsbedingungen wie zum Beispiel der Abstand zwischen dem mobilen Endgerät und der Basisstation, Abschattungseffekte oder die Interferenzsituation, und die anwendbaren Modulations-/Kodierschemata ein. Die Datenrate, die ein Teilnehmer i erhalten kann, wenn er einen physikalischen Kanal exklusiv nutzen könnte, wird mit $S_i^c$ bezeichnet und hängt von dem angewandten Modulations-/Kodierschema C ab

$$\{S_i^c : C = MCS\text{ -}1,... , MCS\text{ - }9\} .$$

Die tatsächlich erzielte Datenrate $R_i$ hängt somit von dem zugewiesenen Modulations-/Kodierschema C ab. Ferner hängt sie von dem Anteil $p_{i,j}$ ab, den der Teilnehmer i auf dem Kanal j aufgrund der Zuweisung erhält. Dabei gilt

$$0 \le p_{i,j} \le 1, (1 \le i \le N, 1 \le j \le K)$$

$$\sum_{j=1}^{K} p_{i,j} = 1 .$$

$$( p_{i,j} > 0 )$$

bedeutet, dass der Teilnehmer i einen Anteil $p_{i,j}$ auf dem Paketdatenkanal j zugewiesen bekommen hat.

Für ein gegebenes Modulations-/Kodierschema C und die Größen $S^c$ und $p_{i,j}$, ist die tatsächliche Datenrate für den Teilnehmer i

$$R_i = \sum_{j=1}^{K} S_i^c \, p_{i,j} .$$

Je nach Auslastung des Systems und den Funkfeldbedingungen wird die tatsächliche Datenrate $R_i$ größer, gleich oder kleiner als die vom Teilnehmer i geforderte Zieldatenrate $R_i^*$ sein. Ein Maß für die Zufriedenheit des Teilnehmers i sei der Nutzen $U_i$ des Teilnehmers i, der folgendermaßen definiert wird:

$$U_i := \frac{R_i}{R_i^*}.$$

Mit dem Verfahren zur Zuweisung von Ressourcen wird die Zuweisungsmatrix $(p_{i,j})$ bestimmt, die den Nutzen $U_i$ für alle Teilnehmer

$$i \in \{1,...,N\}$$

optimiert. Da es nicht möglich ist, den Nutzen $U_i$ für einen Teilnehmer i zu erhöhen, ohne den Nutzen $U_k$ für alle anderen Teilnehmer k zu reduzieren, wird der Nutzen aller Teilnehmer definiert und dieser optimiert. Der Nutzen U aller Teilnehmer wird folgendermaßen definiert

$$U = F(U_1,..,U_N) := Min\{U_1, ...,U_N\}.$$

Bei der Optimierung des Nutzens aller Teilnehmer U wird somit der Nutzen desjenigen Teilnehmers i maximiert, der den kleinsten Nutzen $U_i$ aufweist. Dadurch wird berücksichtigt, dass die angeforderte Zieldatenrate der einzelnen Teilnehmer unterschiedlich ist. Mathematisch ausgedrückt bedeutet dies: Maximiere die Funktion

$$(p_{i,j}) \rightarrow Min\{U_1(p_{i,j}),...,U_N(p_{i,j})\}, \qquad i.e.$$

$$\underset{P}{Max}\{Min\{U_1(P),...,U_N(P)\}\}$$

mit den Randbedingungen

$$\sum_{j=1}^{K} p_{i,j} = 1, \quad \text{für alle Kanäle <j>}$$

$$0 \leq p_{i,j} \leq 1$$

$R_i \geq R_i^{min}$ für alle Teilnehmer 1<=i<=N.
Der Wert V der optimalen Zuweisungsmatrix $(p_{i,j})$ wird folgendermaßen definiert

$$V := \underset{P}{Max} \, Min\{U_1, \cdots ,U_N\} \cdot$$

Solange für alle Teilnehmer i gilt

$$R_i \geq R_i^{min}$$

gilt

$$U_1 = U_2 = ... = U_N.$$

Bei der Bestimmung der Zuweisungsmatrix müssen folgende zusätzliche Randbedingungen berücksichtigt werden: Die Anzahl der Zeitschlitze, auf denen das mobile Endgerät senden beziehungsweise empfangen kann, ist in der Regel kleiner als die Anzahl k der Paketdatenkanäle PDCH. Ferner kann ein- und derselbe Paketdatenkanal PDCH nur einer begrenzten Anzahl $N_{max}$ Teilnehmer zugewiesen werden. Schließlich steht nur eine begrenzte Anzahl von Zeitschlitzen auf der $A_{bis}$-Schnittstelle zur Verfügung, so dass möglicherweise nicht jedes Modulations-/Kodierschema angewendet werden kann. Die anwendbaren Modulations-/Kodierschemata hängen ab von der aktuellen Zuweisung der $A_{bis}$-Zeitschlitze zu den Paketdatenkanälen und von der Anzahl der aktuell nicht benutzten $A_{bis}$-Kanäle.

Das Problem der maximalen Anzahl $N_{max}$ der Teilnehmer, denen ein- und derselbe Paketdatenkanal zugewiesen werden kann, wird durch Einführen einer neuen Randbedingung für $p_{ij}$ gelöst:

$$p_{i,j} \geq \frac{1}{N_{max}}.$$

Sind bereits N Teilnehmer auf den verfügbaren Paketdatenkanälen PDCH allokiert, und soll eine neue Verbindung für einen neuen Teilnehmer N+1 aufgebaut werden, so wird zunächst durch entsprechende Randbedingungen dafür gesorgt, dass die schon allokierten Teilnehmer ihre aktuelle Zuweisung zu den Paketdatenkanälen behalten. Sei ein Teilnehmer i auf den Paketdatenkanälen ($j_1$... bis $j_M$) allokiert, so wird

$$p_{i,j} \leq 0$$

für

$$j \notin \{j_1, ..., j_M\}$$

festgeschrieben. Bei der Suche nach Paketdatenkanälen für den neuen Teilnehmer N+1 wird

$$p_{N+1,j} \leq 0$$

für alle

$$j \notin \{j_1, ..., j_M\}$$

festgeschrieben, um zu verhindern, dass der Teilnehmer N+1 auf einem anderen Paketdatenkanal allokiert wird.

Es werden vernünftig erscheinende Zuweisungen untersucht. Als vernünftig erscheinende Zuweisungen werden Kombinationen von Paketdatenkanälen betrachtet, deren Anzahl der Zeitschlitzfähigkeit des mobilen Endgerätes entspricht und die auf aufeinanderfolgenden Paketdatenkanälen angeordnet sind. Ist die Anzahl k der Paketdatenkanäle 6, die Zeitschlitzfähigkeit des mobilen Endgerätes 4, so ergeben sich nur die drei Alternativen {0,1,2,3}, {1,2,3,4}, {2,3,4,5}. Für diese drei Alternativen wird die Zuweisung berechnet. Nachfolgend wird aus den sich ergebenden Werten V der Zuweisungsmatrix die größte ausgewählt. Bei dieser Vorgehensweise mag zwar eine Zuweisung, die mit einer größeren Umverteilung der Kanäle verbunden wäre, und möglicherweise das wirkliche Optimum darstellt, nicht gefunden werden. Dafür wird auf diese Weise die Zahl der linearen Optimierungen, die berechnet werden müssen, begrenzt. Dadurch wird Prozessorleistung eingespart.

Als Ergebnis wird die Zuweisungsmatrix ($p_{ij}$) , die Anzahl der zugewiesenen $A_{bis}$-Kanäle ($A_j$) und das ausgewählte Modulations/Kodierschema CS für den Teilnehmer N+1 ermittelt.

Zur Vorbereitung der Optimierungsaufgabe muss ausgehend von der Anzahl der verfügbaren $A_{bis}$-Kanäle und dem Vektor $S^c$ das beste verfügbare Modulations-/Kodierschema CS berechnet werden. Es handelt sich dabei um dasjenige Modulations-/Kodierschema mit der größten Datenrate, für das ausreichend $A_{bis}$-Kanäle schon entsprechenden Paketdatenkanälen zugewiesen sind oder ausreichend $A_{bis}$-Kanäle frei verfügbar sind. Für das gegebene Modulations-/Kodierschema werden dann die Matrizen und Vektoren aufgebaut, die Eingangsgrößen für die lineare Optimierung sind.

Bei dieser Vorbereitung wird bereits eine Entscheidung getroffen, welche $A_{bis}$-Kanäle und welches Modulations-/Kodierschema zugewiesen werden soll. Mittels linearen Optimierung wird die optimale Zuweisung ($p_{i,j}$) und deren Wert V bestimmt. Dadurch wird unter den vorab ausgewählten Zuweisungsmöglichkeiten der $A_{bis}$-Kanäle und des Modulations-/Kodierschemas das günstigste ausgewählt.

In dem Verfahren bleibt die Zuweisung von Teilnehmern zu ihren Paketdatenkanälen erhalten. Der Anteil des jeweiligen Teilnehmers am jeweiligen Kanal kann sich jedoch bei jeder Allokation ändern. Dadurch werden die Dienstgüteanforderungen der schon zugewiesenen Benutzer erhalten.

Beendet ein Teilnehmer seine Verbindung, so werden die Zuweisungen der Ressourcen für die verbleibenden Benutzer neu berechnet. Das Verfahren bewirkt dann, dass die verbleibenden Benutzer weiterhin denselben Paketdatenkanälen zugewiesen sind. Sollten dadurch Paketdatenkanäle leer werden, so kann durch ein heuristisches Verschieben ein Teil der Allokationen verändert werden.

Ändern sich die Funkverhältnisse für schon allokierte Benutzer deutlich, so sollte die gemeinsame Zuweisung neu berechnet werden. Dasselbe gilt, falls $A_{bis}$-Kanäle frei werden.

In einem Ausführungsbeispiel wird eine Sende/Empfangseinheit einer Basisstation mit 6 Paketdatenkanälen {0,1,2,3,4,5} betrachtet. Zu Beginn sind alle Paketdatenkanäle leer. Es wird angenommen, dass die maximale Zahl der Teilnehmer, denen ein Paketdatenkanal zugewiesen werden kann, 8 ist. Damit ist die unter Grenze für die Anteile $(p_{i,j})$ 1/8, falls der Teilnehmer i auf den Paketdatenkanal j allokiert wird. Es wird angenommen, dass 26 $A_{bis}$-Kanäle auf der $A_{bis}$-Schnittstelle verfügbar sind. Keiner der $A_{bis}$-Kanäle ist allokiert.

In dem Ausführungsbeispiel wird die aufeinander folgende Ankunft von Teilnehmern 1, 2 und 3 betrachtet. Die Eigenschaften der Teilnehmer 1, 2 und 3 sind in Tabelle 1 dargestellt.

| | **Teilnehmer 1** | **Teilnehmer 2** | **Teilnehmer 3** | |
|---|---|---|---|---|
| **SignalzuStörverhältnis C/I** | 15 dB | 20 dB | 30 dB | |
| **Datenrate für das Modulations-/ Kodierschema** | $S^c$ | $S^c$ | $S^c$ | **#Abis TS per PDCH** |
| MCS-1 | 8.4Kbit/s | 8.8Kbit/s | 8.8Kbit/s | 1 |
| MCS-2 | 10.6 | 11.1 | 11.2 | 2 |
| MCS-3 | 13.7 | 14.6 | 14.8 | 2 |
| MCS-4 | 15.4 | 17.0 | 17.6 | 2 |
| MCS-5 | 18.1 | 21.6 | 22.4 | 2 |
| MCS-6 | 24.5 | 27.2 | 29.6 | 3 |
| MCS-7 | 24.3 | 35.9 | 44.5 | 4 |
| MCS-8 | 22.6 | 39.7 | 53.6 | 5 |
| CS-9 | 19.2 | 38.2 | 57.6 | 5 |
| **Mobile Time Slot Capability** | 4 Zeitschlitze | 3 Zeitschlitze | 4 Zeitschlitze | |
| **Zieldatenrate** | 64 Kbit/s | 111 Kbit/s | 80 Kbit/s | |
| **Minimale Datenrate** | 16 Kbit/s | 32 Kbit/s | 16 Kbit/s | |

In der Tabelle sind jeweils das Signal-zu-Störverhältnis, die Datenraten für vorgegebenes Modulations-/Kodierschema, die Fähigkeit des mobilen Endgerätes gleichzeitig auf verschiedenen Zeitschlitzen zu senden und zu empfangen, d.h. die Mobile timeslot capability, die Zieldatenrate und die minimale Datenrate angegeben. Für die verschiedenen Modulations-/Kodierschemata ist zusätzlich die Anzahl der $A_{bis}$-Kanäle pro Paketdatenkanal $A_{bis}$ TS per TDCH angegeben.

Aus diesen Daten wird zur Vorbereitung die Liste

$$\{S^c : C = MCS\text{ -}1,\dots ,MCS\text{ - }9\}$$

erzeugt, die angibt, welche Datenraten der Teilnehmer zu erwarten hat auf jedem der Paketdatenkanäle, falls nur der Teilnehmer auf diesen Paketdatenkanälen allokiert ist.

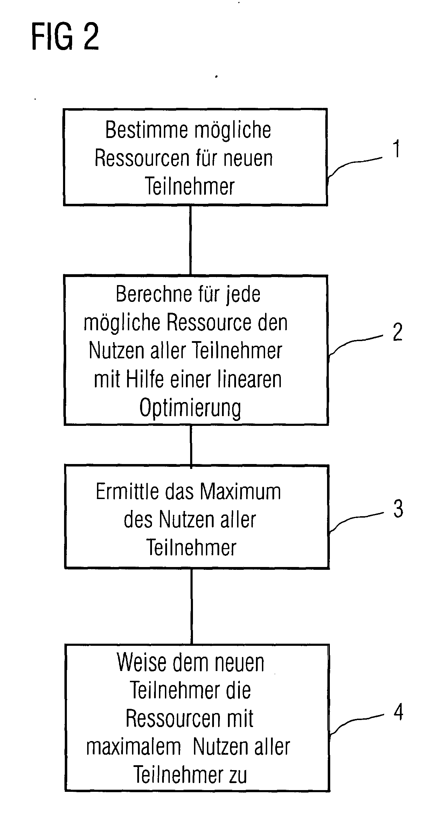

Bei Ankunft des Teilnehmers 1 wird überprüft, welche möglichen Ressourcen zur Verfügung stehen (siehe Figur 2, Schritt 1). Das beste Modulations- und Kodierschema für Teilnehmer 1 ist MCS-6. Damit kann der Teilnehmer 1 bis zu 24,5 Kbit/s auf jedem der Paketdatenkanäle erreichen. Der Teilnehmer Nummer 1 wird auf die Paketdatenkanäle {0,1,2,3} allokiert. Für jeden der Paketdatenkanäle werden 3 $A_{bis}$-Kanäle benötigt. Für die Zuweisungsmatrix P ergibt sich somit

$$P = [1.0\ 1.0\ 1.0\ 1.0\ 0.0\ 0.0].$$

Für den $A_{bis}$-Zuweisungsvektor ergibt sich

$$A = [3\ 3\ 3\ 3\ 0\ 0].$$

Für den Teilnehmer 1 sind nun 12 $A_{bis}$-Kanäle belegt. Es verbleiben somit 26-12=14 $A_{bis}$-Kanäle.

Nachfolgend wird eine Verbindung für Teilnehmer 2 aufgebaut. Für Teilnehmer 2 ist MSC-8 das Modulations/ Kodierschema, bei dem die höchste Datenrate von 39,7 Kbit/s auf jedem Paketdatenkanal erreicht werden kann, falls der Teilnehmer 2 die Paketdatenkanäle nicht mit einem anderen Benutzer teilen muss. Das Modulations/Kodierschema MCS8 benötigt 5 $A_{bis}$-Kanäle für jeden Paketdatenkanal. Für den Teilnehmer 2 ergeben sich somit vier Alternativen der Zuweisung. Es sind ausreichend $A_{bis}$-Kanäle verfügbar, um dem Teilnehmer 2 das beste Modulations/Kodierschema zuweisen zu können.

Alternative 1: Allokation des Teilnehmers 2 auf die Paketdatenkanäle {0,1,2}. Es ergeben sich folgende Zuweisungsmatrizen $P_1$ und $A_{bis}$-Vektoren $A_1$ mit dem Wert $V_1$

$$P_1 = \begin{bmatrix} 0.31 & 0.31 & 0.31 & 1.0 & 0.0 & 0.0 \\ 0.69 & 0.69 & 0.69 & 0.0 & 0.0 & 0.0 \end{bmatrix}$$

$$A_1 = \begin{bmatrix} 3+2 & 3+2 & 3+2 & 3 & 0 & 0 \end{bmatrix}$$

```
V₁ = max min{ U₁, U₂ }  = 0.7369
```

Für diese Allokierung werden für jeden der Paketdatenkanäle {0,1,2} 2 $A_{bis}$-Kanäle zusätzlich benötigt. Das heisst, es verbleiben freie $A_{bis}$-Kanäle: 14-6=8.

Alternative 2: Allokierung des Teilnehmers 2 auf die Paketdatenkanäle {1,2,2,3}. Damit ergibt sich

$$P_2 = \begin{bmatrix} 1.0 & 0.31 & 0.31 & 0.31 & 0.0 & 0.0 \\ 0.0 & 0.69 & 0.69 & 0.69 & 0.0 & 0.0 \end{bmatrix}$$

$$A_2 = \begin{bmatrix} 3 & 3+2 & 3+2 & 3+2 & 0 & 0 \end{bmatrix}$$

```
V₂ = max min{ U₁, U₂ }  = 0.7369
```

Auch in diesem Fall müssen für die Paketdatenkanäle {1,2,3} jeweils zwei zusätzliche $A_{bis}$-Kanäle eingesetzt werden. Es verbleiben somit 14-6=8 unbenutzte $A_{bis}$-Kanäle.

Alternative 3: Allokierung des Teilnehmers 2 auf die Paketdatenkanäle {2,3,4}. Damit ergibt sich

$$P_3 = \begin{bmatrix} 1.0 & 1.0 & 0.21 & 0.21 & 0.0 & 0.0 \\ 0.0 & 0.0 & 0.79 & 0.79 & 1.0 & 0.0 \end{bmatrix}$$

$$A_3 = \begin{bmatrix} 3 & 3 & 3+2 & 3+2 & +5 & 0 \end{bmatrix}$$

```
V₃ = max min{ U₁, U₂ }  = 0.9242.
```

In diesem Fall müssen für die Paketdatenkanäle {2,3} jeweils 2 zusätzliche $A_{bis}$-Kanäle zugewiesen werden, für den Paketdatenkanal 4 müssen 5 zusätzliche $A_{bis}$-Kanäle zugewiesen werden. Damit ergibt sich für die verbleibenden $A_{bis}$-Kanäle 14-9=5.

Alternative 4: Allokierung des Teilnehmers 2 auf die Paketdatenkanäle {3,4,5}. Damit ergibt sich

$$P_4 = \begin{bmatrix} 1.0 & 1.0 & 1.0 & 0.125 & 0.0 & 0.0 \\ 0.0 & 0.0 & 0.0 & 0.875 & 1.0 & 1.0 \end{bmatrix}$$

$$A_4 = \begin{bmatrix} 3 & 3 & 3 & 3+2 & +5 & +5 \end{bmatrix}$$

$$V_4 = \max \min\{ U_1, U_2 \} = \mathbf{1.0281.}$$

In diesem Fall muss auf dem Paketdatenkanal 3 zwei zusätzliche $A_{bis}$-Kanäle und auf den Paketdatenkanälen {4,5} jeweils 5 $A_{bis}$-Kanäle zugewiesen werden. Daher verbleiben 14-12=2 freie $A_{bis}$-Kanäle.

Für jede der Alternativen wird der Wert $V_i$, i=1,2,3,4 mit Hilfe einer linearen Optimierung berechnet (siehe Schritt 2 in Figur 2). Es wird das Maximum bestimmt, das mit der Alternative 4 erzielt wird (siehe Schritt 3 in Figur 2). Daher werden dem Teilnehmer 2 die Ressourcen entsprechend der Alternative 4 zugewiesen (siehe Schritt 4 in Figur 2).

Nachfolgend wird eine weitere Verbindung für Teilnehmer 3 aufgebaut. Die Ausgangssituation ist, dass nur noch zwei freie $A_{bis}$-Kanäle verfügbar sind. Für den Teilnehmer 3 wäre das beste Modulations/Kodierschema MCS-9, mit dem eine maximale Datenrate von 57,6 Kbit/s erzielt werden kann. Wegen der Belegung der $A_{bis}$-Kanäle kann der Teilnehmer 3 nur auf den Paketdatenkanälen {2,3,4,5} das Modulations/Kodierschema MCS-9 erhalten. Bei einer Allokation auf den Paketdatenkanälen {1,2,3,4} ist nur die Verwendung des Modulations/Kodierschemas MCS-7 oder geringerer Kodierschemata möglich, bei denen 4 $A_{bis}$-Kanäle pro Paketdatenkanal erforderlich sind. Bei einer Allokierung auf die Paketdatenkanäle {0,1,2,3} ist nur die Verwendung des Modulations-/Kodierschemas MCS-6 und geringerer Kodierschemata möglich, da bei einer Verwendung von MCS-6 nur 3 $A_{bis}$-Kanäle pro Paketdatenkanal erforderlich sind.

Nachfolgend werden für die gefundenen Zuweisungsalternativen die Zuweisungsmatrix $P_i$, der $A_{bis}$-Zuweisungsvektor $A_i$ und der Wert $V_i$ ermittelt.

Alternative 1: Allokierung des Teilnehmers 3 auf die Paketdatenkanäle {0,1,2,3} mit dem Modulations/Kodierschema MCS-6 führt zu folgendem Ergebnis

$$P_1 = \begin{bmatrix} 0.45 & 0.45 & 0.45 & 0.56 & 0.0 & 0.0 \\ 0.0 & 0.0 & 0.0 & 0.125 & 1.0 & 1.0 \\ 0.55 & 0.55 & 0.55 & 0.315 & 0.0 & 0.0 \end{bmatrix}$$

$$A_1 = \begin{bmatrix} 3+0 & 3+0 & 3+0 & 5+0 & 5 & 5 \end{bmatrix}$$

$$V_1 = \text{Max Min } \{U_1, U_2, U_3\} = \mathbf{0.7291.}$$

Da für diese Alternative keine zusätzlichen $A_{bis}$-Kanäle zugewiesen werden müssen, verbleiben zwei unbenutzte $A_{bis}$-Kanäle.

Alternative 2: Allokierung des Teilnehmers 3 auf die Paketdatenkanäle {1,2,3,4} mit dem Modulations- und Kodierschema MCS-7 ergibt folgendes Ergebnis

$$P_2 = \begin{bmatrix} 1.0 & 0.38 & 0.38 & 0.41 & 0.0 & 0.0 \\ 0.0 & 0.0 & 0.0 & 0.46 & 0.87 & 1.0 \\ 0.0 & 0.62 & 0.62 & 0.13 & 0.13 & 0.0 \end{bmatrix}$$

$$A_2 = \begin{bmatrix} 3 & 3+1 & 3+1 & 5+0 & 5+0 & 5 \end{bmatrix}$$

$$V_2 = \text{Max Min } \{U_1, U_2, U_3\} = \mathbf{0.8325.}$$

Für diese Alternative werden für die Paketdatenkanäle 1 und 2 jeweils ein zusätzlicher $A_{bis}$-Kanal benötigt. Damit verbleiben keine unbenutzten $A_{bis}$-Kanäle.

Alternative 3: Allokierung des Teilnehmers 3 auf die Paketdatenkanäle {2,3,4,5} mit dem Modulations/Kodierschema MCS-9. Es ergibt sich

$$P_3 = \begin{bmatrix} 1.0 & 1.0 & 0.17 & 0.14 & 0.0 & 0.0 \\ 0.0 & 0.0 & 0.0 & 0.73 & 0.87 & 0.87 \\ 0.0 & 0.0 & 0.83 & 0.13 & 0.13 & 0.13 \end{bmatrix}$$

$$A_3 = \begin{bmatrix} 3 & 3 & 3+2 & 5+0 & 5+0 & 5+0 \end{bmatrix}$$

$$V_3 = \text{Max Min } \{U_1, U_2, U_3\} = 0.8833.$$

Für diese Alternative muss dem Paketdatenkanal 2 zwei weitere $A_{bis}$-Kanäle zugewiesen werden. Es verbleiben somit keine unbenutzten $A_{bis}$-Kanäle.

Nachfolgend wird das Maximum der Werte $V_i$, i=1,2,3, bestimmt. V3 ist der größte Wert, so dass eine Zuweisung der Ressourcen für Teilnehmer 3 entsprechend der Alternative 3 erfolgt.

Beim Verbindungsabbau des Teilnehmers 1 wird die Matrix p neu berechnet. Sie weist nunmehr nur noch zwei Zeilen auf, wobei die ersten Zeile dem Teilnehmer 2 und die zweite Zeile dem Teilnehmer 3 entspricht. Es ergibt sich

$$P = \begin{bmatrix} 0.0 & 0.0 & 0.0 & 0.875 & 0.875 & 0.875 \\ 0.0 & 0.0 & 1.0 & 0.125 & 0.125 & 0.125 \end{bmatrix}$$

$$A = \begin{bmatrix} 3-3 & 3-3 & 5 & 5 & 5 & 5 \end{bmatrix}.$$

Es werden 6 $A_{bis}$-Kanäle freigegeben. Die Paketdatenkanäle 0 und 1 sind nicht mehr benutzt. Eine Verschiebung des Teilnehmers 2 auf die Paketdatenkanäle 0,1,2 müsste mit einem heuristischen Verfahren ausserhalb des beschriebenen Verfahrens erfolgen.

**Patentansprüche**

1.    Verfahren zur Zuweisung funktechnischer Ressourcen für eine Datenübertragung in einem Funkkommunikationssystem, bei dem für einen Teilnehmer zuzuweisende Ressourcen auf einer ersten Schnittstelle zwischen einem Endgerät und einem ersten Netzknoten und auf einer zweiten Schnittstelle zwischen dem ersten Netzknoten und einem zweiten Netzknoten gemeinsam bestimmt werden, wobei eine vom Teilnehmer angeforderte Datenrate und Übertragungseigenschaften der ersten Schnittstelle berücksichtigt werden, wobei ein Zusammenhang zwischen auf der ersten Schnittstelle zuzuweisenden Ressourcen und auf der zweiten Schnittstelle zuzuweisenden Ressourcen berücksichtigt wird, und wobei bereits bestehende Zuweisungen anderer Teilnehmer zu Ressourcen berücksichtigt werden und der Nutzen aller Teilnehmer optimiert wird.

2.    Verfahren nach Anspruch 1,

   -    bei dem die erste Schnittstelle als Funkschnittstelle zwischen einem mobilen Endgerät und einer netzseitigen Funkstation, die den ersten Netzknoten bildet, ausgebildet ist,
   -    bei dem dem Teilnehmer für die Übertragung über die erste Schnittstelle ein Kodierschema und ein oder mehrere Elemente von Paketdatenkanälen zugewiesen werden,
   -    bei dem dem Teilnehmer für die Übertragung über die zweite Schnittstelle ein oder mehrere Zeitschlitze zugewiesen werden, wobei zwischen der Anzahl der auf der zweiten Schnittstelle zugewiesenen Zeitschlitze und dem zugewiesenen Kodierschema ein Zusammenhang besteht.

3.    Verfahren nach Anspruch 2, bei dem dem Teilnehmer Elemente auf höchstens so vielen Paketdatenkanälen zugewiesen werden, wie es der Anzahl der Kanäle entspricht, auf denen das Endgerät gleichzeitig senden beziehungsweise empfangen kann.

4. Verfahren nach einem der Ansprüche 1 bis 3,

   - bei dem als Nutzen eines Teilnehmers der Quotient aus tatsächlicher Datenrate und vom Teilnehmer angeforderter Datenrate definiert wird,
   - bei dem als Nutzen aller Teilnehmer das Minimum der Quotienten aus tatsächlicher Datenrate und vom Teilnehmer angeforderter Datenrate für alle Teilnehmer definiert wird,
   - bei dem der Nutzen aller Teilnehmer in dem Sinne optimiert wird, dass der Nutzen maximal wird.

5. Verfahren nach Anspruch 4,

   - bei dem für eine bestimmte Anzahl von Teilnehmern eine minimale Datenrate vorgegeben wird, die bei der Datenübertragung von und zu dem Teilnehmer nicht unterschritten werden soll,
   - bei dem die minimale Datenrate für diese Teilnehmer als Randbedingung bei der Optimierung des Nutzens aller Teilnehmer berücksichtigt wird.

6. Verfahren nach einem der Ansprüche 1 bis 5,

   - bei dem für den Teilnehmer geprüft wird, auf welche Anzahl Paketdatenkanäle die zuzuweisenden Elemente verteilt werden,
   - bei dem für eine nicht notwendigermassen echte Teilmenge aller Kombinationen zusammenhängender Paketdatenkanäle, die der ermittelten Anzahl entsprechen, eine Zuweisung für den Teilnehmer untersucht wird und der Nutzen aller Teilnehmer ermittelt wird,
   - bei dem dem Teilnehmer die Kombination zusammenhängender Paketdatenkanäle zugewiesen wird, für die sich der größte Nutzen aller Teilnehmer ergibt.

FIG 1

# FIG 2

| | |
|---|---|
| Bestimme mögliche Ressourcen für neuen Teilnehmer | 1 |
| Berechne für jede mögliche Ressource den Nutzen aller Teilnehmer mit Hilfe einer linearen Optimierung | 2 |
| Ermittle das Maximum des Nutzen aller Teilnehmer | 3 |
| Weise dem neuen Teilnehmer die Ressourcen mit maximalem Nutzen aller Teilnehmer zu | 4 |

**Europäisches Patentamt**

## EUROPÄISCHER RECHERCHENBERICHT

Nummer der Anmeldung

EP 03 00 4530

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2002/003783 A1 (FRIMAN LEIF ET AL) 10. Januar 2002 (2002-01-10) | 1,2 | H04Q7/38 |
| A | * Seite 1, Absatz 1 - Absatz 13; Abbildung 5 * * Seite 3, Absatz 43; Abbildung 1C * --- | 3-6 | |
| A | DE 100 29 427 A (SIEMENS AG) 20. Dezember 2001 (2001-12-20) * Spalte 3, Zeile 20 - Zeile 40 * * Spalte 3, Zeile 62 - Spalte 4, Zeile 16; Abbildung 3 * * Spalte 5, Zeile 24 - Zeile 51 * --- | 1-6 | |
| A | EP 1 154 663 A (LUCENT TECHNOLOGIES INC) 14. November 2001 (2001-11-14) * Seite 4, Zeile 20 - Seite 5, Zeile 10; Abbildung 1 * * Seite 6, Zeile 19 - Zeile 36 * --- | 1-6 | |
| A | US 6 374 112 B1 (WIDEGREN INA ET AL) 16. April 2002 (2002-04-16) * Spalte 3, Zeile 33 - Zeile 43; Abbildungen 1,6 * ----- | 1,2 | RECHERCHIERTE SACHGEBIETE (Int.Cl.7) H04Q H04L |

Der vorliegende Recherchenbericht wurde für alle Patentansprüche erstellt

| Recherchenort | Abschlußdatum der Recherche | Prüfer |
|---|---|---|
| MÜNCHEN | 17. Juli 2003 | Hultsch, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**                    EP 03 00 4530

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 2002003783 | A1 | 10-01-2002 | FI<br>AU<br>EP<br>WO | 992072 A<br>7294800 A<br>1131966 A1<br>0124553 A1 | 28-03-2001<br>30-04-2001<br>12-09-2001<br>05-04-2001 |
| DE 10029427 | A | 20-12-2001 | DE<br>WO<br>EP | 10029427 A1<br>0197402 A2<br>1297637 A2 | 20-12-2001<br>20-12-2001<br>02-04-2003 |
| EP 1154663 | A | 14-11-2001 | EP<br>AU<br>BR<br>CA<br>CN<br>JP<br>US | 1154663 A1<br>4028601 A<br>0101643 A<br>2342093 A1<br>1323152 A<br>2002009841 A<br>2002004379 A1 | 14-11-2001<br>15-11-2001<br>26-12-2001<br>09-11-2001<br>21-11-2001<br>11-01-2002<br>10-01-2002 |
| US 6374112 | B1 | 16-04-2002 | AU<br>AU<br>CA<br>CN<br>EP<br>JP<br>WO | 756958 B2<br>3857199 A<br>2326750 A1<br>1304619 T<br>1066729 A1<br>2002511672 T<br>9952307 A1 | 30-01-2003<br>25-10-1999<br>14-10-1999<br>18-07-2001<br>10-01-2001<br>16-04-2002<br>14-10-1999 |

EPO FORM P0461

Für nähere Einzelheiten zu diesem Anhang : siehe Amtsblatt des Europäischen Patentamts, Nr.12/82